(19) Europäisches Patentamt

European Patent Office

Office européen des brevets

(11) Veröffentlichungsnummer: **0 303 650 B1**

# (12) EUROPÄISCHE PATENTSCHRIFT

(45) Veröffentlichungstag der Patentschrift: **19.11.92**

(21) Anmeldenummer: **88901788.5**

(22) Anmeldetag: **23.02.88**

(86) Internationale Anmeldenummer:
**PCT/DE88/00091**

(87) Internationale Veröffentlichungsnummer:
**WO 88/06805 (07.09.88 88/20)**

(51) Int. Cl.⁵: **H01M 2/10**, **A47B 47/02**

---

(54) AUS EINZELELEMENTEN ZUSAMMENSETZBARES GESTELL FÜR NOTSTROMBATTERIEN.

---

(30) Priorität: **24.02.87 DE 8702779 U**

(43) Veröffentlichungstag der Anmeldung:
**22.02.89 Patentblatt 89/08**

(45) Bekanntmachung des Hinweises auf die
Patenterteilung:
**19.11.92 Patentblatt 92/47**

(84) Benannte Vertragsstaaten:
**DE FR GB IT SE**

(56) Entgegenhaltungen:
**EP-A- 0 158 368**      **DE-U- 8 607 513**
**DE-U- 8 610 734**      **FR-A- 2 343 445**
**FR-A- 2 350 073**      **GB-A- 1 575 807**

(73) Patentinhaber: **Kunstmann, Dieter J.**
**Amberger Strasse 12**
**W-8959 Buchloe(DE)**

(72) Erfinder: **Kunstmann, Dieter J.**
**Amberger Strasse 12**
**W-8959 Buchloe(DE)**

(74) Vertreter: **Haft, Berngruber, Czybulka**
**Postfach 14 02 46 Hans-Sachs-Strasse 5**
**W-8000 München 5(DE)**

EP 0 303 650 B1

## Beschreibung

Die Erfindung bezieht sich auf ein aus Einzelelementen zusammensetzbares Gestell für Notstrombatterien. Ein solches Gestell ist aus der europäischen Patentanmeldung 158 368 bekannt. Dieses Gestell besteht aus vertikalen Ständerplatten, die entlang ihrer oberen horizontalen Seiten eine horizontale Auflagefläche mit darin angebrachten Schlitzöffnungen aufweisen. Balken bzw. Auflagetraversen sind vorgesehen, die den Abstand zwischen benachbarten Ständerplatten überbrückend mit Steckplatten, die an ihren Enden vorgesehen sind, in die Schlitzöffnungen an den Ständerplatten eingesteckt werden können. Die Einzelteile des Gestelles sind vorzugsweise aus kunststoffbeschichteten Stahlblechteilen bzw. Stahlprofilen hergestellt.

Eine Variante dieses Gestells ist in dem deutschen Gebrauchsmuster 86 07 513 beschrieben. Zum einen werden hier teilweise glasfaserverstärkte Kunststoffteile verwendet. Zum anderen ist es mit der dort angegebenen Lösung möglich, auch Gestelle mit mehreren Etagen aufzubauen. In die Seitenteile können kleine Befestigungsrohre eingesteckt werden, die dann mit Hilfe von Vierkantrohren bis zum darübergelegenen Seitenteil verlängert werden. Dieser Vorgang kann mehrfach wiederholt werden, so daß ein mehretagiges Gestell aufgebaut wird. Ein Nachteil dieses Gestells ist jedoch die nicht allen Anforderungen entsprechende mangelnde mechanische Stabilität. Außerdem sind bei diesem Gestell die Schlitzöffnungen für die Steckplatten der Auflagetraversen bzw. Balken in Steckelementen aufgenommen, die ihrerseits auf die Seitenteile aufsteckbar sind.

Der Erfindung liegt die Aufgabe zugrunde, ein Gestell der in Rede stehenden Art anzugeben, das aus wenigen Einzelteilen aufgebaut ist, das ferner mit mehreren Etagen ausgerüstet werden kann und dabei eine hohe mechanische Stabilität aufweist.

Gemäß der Erfindung werden hierzu im wesentlichen nur drei Einzelelemente benötigt, nämlich Seitenteile, die die Steckschlitze bzw. Schlitzöffnungen aufweisen und an deren Enden je ein Vierkantrohr mit einer vertikalen Achse vorgesehen ist, ferner Verbinderrohre, die durch die Vierkantrohre der Seitenteile zu schieben sind und sich über die gesamte Höhe des Gestelles erstrecken, und schließlich Distanzstücke in Form von Vierkantrohren, die über die Verbinderrohre zu schieben sind und sich jeweils zwischen den Vierkantrohren zweier übereinander angeordneter Seitenteile erstrecken.

Durch die über die gesamte Höhe des Gestells verlaufenden Verbinderrohre erhält das Gestell insgesamt eine hohe mechanische Stabilität. Diese Stabilität kann noch verbessert werden, wenn die Verbinderrohre im Bereich der Vierkantrohre mit diesen verbunden werden, vorzugsweise durch eine Schraubverbindung. Diese Schraubverbindung weist z.B. eine in die Verbinderrohre eingenietete Mutter sowie eine Schraube auf, die sich durch die Wand der Vierkantrohre der Seitenteile erstreckt und in die eingenietete Mutter eingreift. Wird ein mehretagiges Gestell gewünscht, so sind in den entsprechenden Höhen jeweils in die Verbinderrohre Muttern eingenietet bzw. Gewinde eingeschnitten. Je nach Länge der Verbinderrohre, der Anzahl der eingenieteten Muttern bzw. der eingeschnittenen Gewinde und bei Verwendung unterschiedlich langer Distanzstücke sowie der entsprechenden Anzahl von Seitenteilen können Gestelle mit fast beliebig vielen Etagen aufgebaut werden. Die mechanische Stabilität kann noch durch Diagonalversteifungen erhöht werden. Die Länge der Distanzstücke richtet sich im wesentlichen danach, welche Batterietypen auf dem Gestell gelagert werden.

Ebenso können gestufte Seitenteile verwendet werden, so daß die Notstrombatterien in mehreren Etagen auch hintereinander gelagert werden können. Die Länge der hierbei verwendeten Distanzstücke muß entsprechend an die Stufung angepaßt sein.

Die Seitenteile weisen vorzugsweise einen im wesentlichen flachen länglichen Seitenteilträger auf, der sich zwischen den Vierkantrohren erstreckt. Zu beiden Seiten dieser Seitenteilträger sind Winkelprofile an den Vierkantrohren angeschweißt, so daß sich damit über die gesamte Tiefe der Seitenteile erstreckende Steckschlitze bzw. Schlitzöffnungen ergeben. Die Winkelprofile sind dabei mit ihren unteren Enden gegen die Seitenteilträger leicht geneigt, so daß sich ein nach unten konisch verjüngender Steckschlitz ergibt, der die Steckplatten der Auflagetraversen bzw. Balken absolut festhält. Die Winkelprofile können noch durch Abstützungen an der Unterseite gegen Durchbiegung versteift werden. Auf diese Weise bleiben die Schlitzöffnungen über ihre gesamte Länge frei zugänglich, so daß je nach dem Gewicht der zu tragenden Notstrombatterien die gewünschte Anzahl von Auflagetraversen bzw. Balken in die Schlitzöffnungen eingesteckt werden kann. Durch die Anordnung zweier Schlitzöffnungen zu beiden Seiten der Seitenteilträger kann das Gestell in Längsrichtung aneinander fluchtend verlängert werden.

In die Vierkantrohre der untersten Seitenteile können von unten noch paßgenau Isolatorenplatten eingesteckt werden, die elektrische Isolatoren aufnehmen, welche durch Schnellverschlüsse auf die Isolatorenplatten fixiert sind.

Vorteilhafte Ausgestaltungen der Erfindung gehen aus den Unteransprüchen hervor. Ausführungsformen der Erfindung sind anhand der Zeichnung näher erläutert. In dieser stellen dar:

Figur 1      eine perspektivische Gesamtansicht eines Gestelles gemäß der Erfindung;

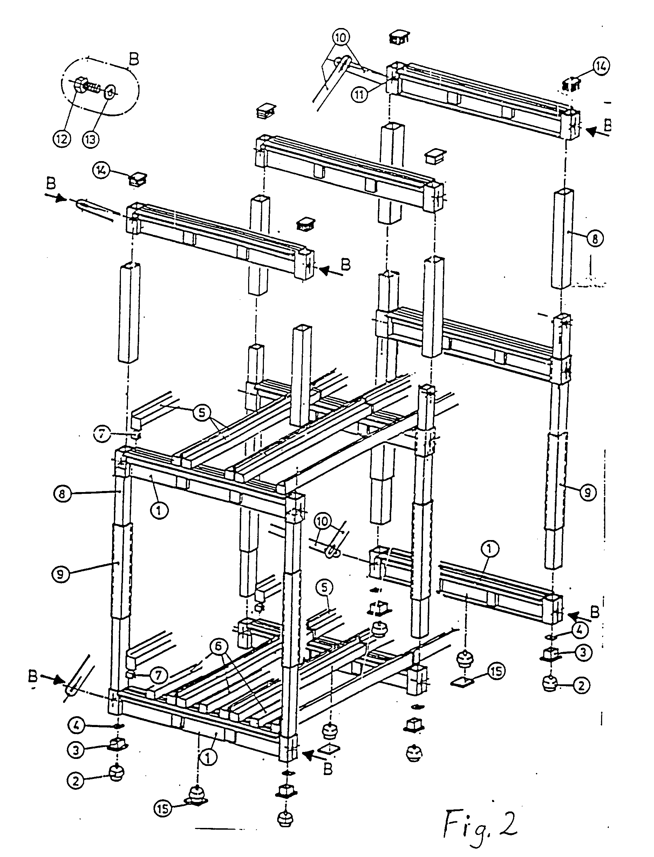

Figur 2      eine Explosionsdarstellung eines Gestelles gemäß der Erfindung zur Erläuterung der dabei verwendeten Einzelteile;

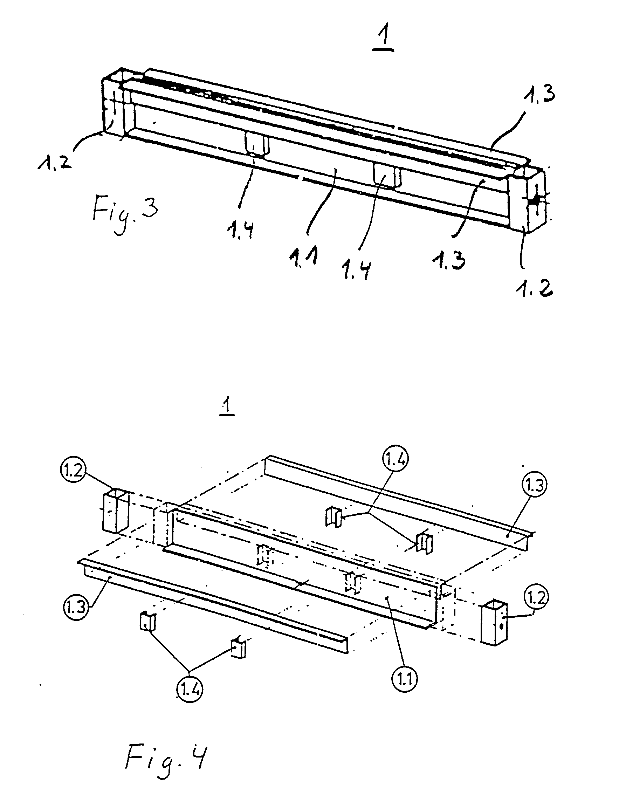

Figur 3      eine perspektivische Ansicht eines Seitenteils für ein Gestell gemäß der Erfindung;

Figur 4      eine perspektivische Explosionsdarstellung des Seitenteiles gemäß Figur 3;

Figur 5      eine perspektivische Ansicht einer anderen Ausführungsform eines Seitenteiles für ein Gestell gemäß der Erfindung.

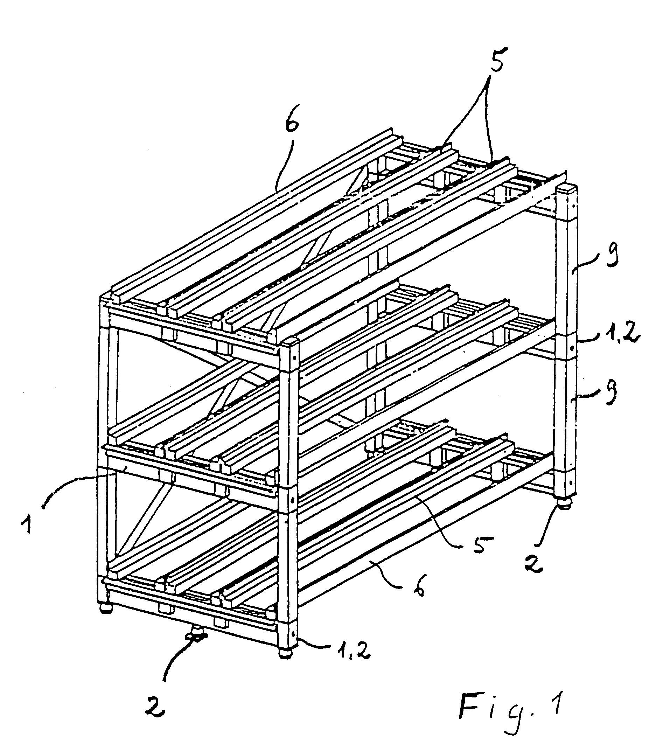

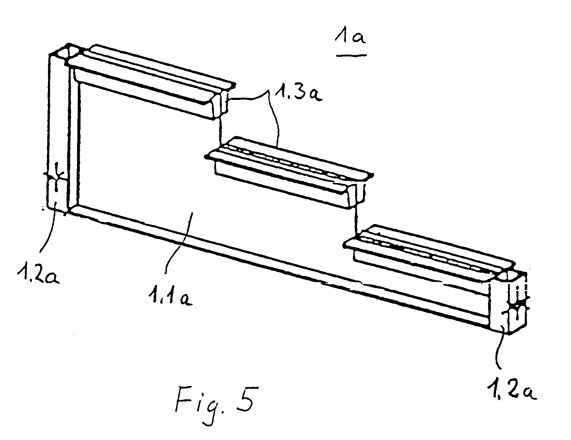

Das in Figur 1 dargestellte Gestell besteht aus Seitenteilen 1, die wie aus Figur 4 ersichtlich und nachstehend erläutert hergestellt werden: Ein lotrechter, unten aus Stabilitätsgründen nach einer Seite gekanteter Seitenteilträger 1.1, der vorzugsweise aus Blech geeigneter Stärke besteht, wird zur weiteren Stabilisierung genau mittig zwischen zwei Vierkantrohren 1.2 gleicher Stärke oben und unten genau bündig eingeschweißt. An beiden Seiten des Seitenteilträgers 1.1 werden oben ebenfalls mit den Vierkantrohren 1.2 bündig, nach unten zu etwas verjüngt zum Seitenteilträger 1.1 verlaufend, Winkelprofile 1.3 aus Blech in entsprechendem, zur Aufnahme von Balken 6 und/oder Traversen 5 geeigneten Abstand eingeschweißt. Je nach Länge dieser Winkelprofile 1.3 wird aus Stabilitätsgründen eine bestimmte Anzahl von Abstützungen 1.4 zur Unterstützung darunter geschweißt. Alle Seitenteile 1 werden mit säure- und laugebeständigem Kunststoff beschichtet, vorzugsweise in einer Beschichtungsstärke, die der geforderten elektrischen Durchschlagsfestigkeit entspricht.

Bei größeren, d.h. längeren Seitenteilen 1 erhält die untere Kante der Seitenteilträger 1.1 zusätzliche Bohrungen in die erforderlichenfalls zur Verminderung des Bodendrucks vorzugsweise bei Mehretagenbauweise zusätzliche Bodenisolatoren 2 eingesteckt werden. Die Isolatoren sind in Isolatorplatten 3 eingesteckt und sind mit Schnellverschlüssen 4 fixiert. Diese Einheiten werden in die Vierkantrohre 1.2 der unteren, am Boden befindlichen Seitenteile 1 von unten eingesteckt.

Über die obere Kante der Seitenteilträger 1.1 werden Ausgleichsprofile 7 aus nichtrostendem Stahlblech gestülpt, die Verletzungen und/oder druckbedingtes Wegfließen der Kunststoffbeschichtung verhindern und durch ihre Federwirkung für strammen Sitz der einzusteckenden horizontalen Auflagetraversen 5 und Balken 6 sorgen.

Die Seitenteile 1 werden verbunden durch die horizontalen Auflegetraversen 5 und/oder Balken 6, die entweder ein stuhlförmiges Hohlprofil 5 mit einem nach oben stehenden Anschlagflansch 5.1 aufweisen oder ein einfaches VierkantHohlprofil 6 sein können. An seinen beiden Enden weist jede Auflagetraverse 5 und/oder Balken 6 eine nach unten gerichtete Steckplate 5.2 bzw. 6.2 auf, die so bemessen ist, daß sie mit Passgenauigkeit in die am Seitenteil 1 vom etwas konisch verlaufenden Winkelprofil 1.3 und dem Seitenteilträger 1.1 gebildete Schlitzöffnung einsteckbar ist. Die Auflagetraversen 5 bzw. Balken 6 können in Längsrichtung an beliebigen Stellen, an die Breite bzw. Tiefe der jeweiligen Batteriezelle angepaßt, eingesteckt werden.

Die Einzelteile des Gestells können in verschiedenen Formen und Größen hergestellt werden, um daraus Gestelle verschiedener Form und Größe Zusammensetzen zu können.

Eine Etagenbauweise wird dadurch realisiert, daß in die Vierkantrohre 1.2 der unteren Seitenteile 1 Verbinderrohre 8 eingesteckt werden, die sich über die gesamte Höhe des Gestells erstrecken. In die Verbinderrohre 8 sind Muttern eingenietet bzw. Gewinde eingeschnitten. Mit Schrauben 12 und Beilagscheiben 13 werden Seitenteile 1 und Verbinderrohre 8 verschraubt. Über jedes Verbinderrohr werden nun ein Distanzstück 9 und anschließend zur Bildung der nächsten Etage weitere Seitenteile 1 gesteckt und wiederum verschraubt. In derselben Weise können drei und mehr Etagen stabil zusammengesetzt werden. Auf der rückwärtigen Seite des Gestells werden zur Versteifung noch zusätzlich Diagonalen 10 beim Verschrauben der Seitenteile 1 mit den Verbinderrohren 8 mit einbezogen. Alle Stahlteile sind gegen Korrosion und aggressive Batterielauge/-säure dergestalt geschützt, daß sie vorzugsweise sandgestrahlt und der besseren Haftfähigkeit wegen im Wirbelsinterverfahren mit besonders geeignetem Kunststoff beschichtet werden.

Das Gestell kann durch Anbau beliebig seitlich verlängert werden.

In Figur 5 ist ein gestuftes Seitenteil 1a dargestellt, so daß Gestelle mit hintereinanderliegenden Etagen aufgebaut werden können. Am vorderen und hinteren Ende ist wiederum je ein Vierkantrohr 1.2a vorgesehen, zwischen denen sich ein gestufter Seitenteilträger 1.1a erstreckt. Die Schlitzöffnungen erden durch die gestuften Seitenteilträger und entsprechende Winkelprofile 1.3a wie oben geschildert gebildet.

## Patentansprüche

1.    Aus Einzelelementen zusammensetzbares Gestell, vorzugsweise für Notstrombatterien, bestehend aus vertikalen Seitenteilen, die an ihren Enden je ein Vierkantrohr mit einer vertikalen Achse aufweisen und mit Steckschlitzen zum Einstecken von horizontalen Auflagetraversen oder Balken versehen sind, wobei mindestens zwei parallel in gleicher Höhe verlaufende Auflagetraversen bzw. Balken eine Auflage für Notstrombatterien bilden und jede Auflagetraverse bzw. jeder Balken an seinen Enden je eine starr angebrachte, nach unten vorstehende Steckplatte aufweist, die in die Steckschlitze der Seitenteile einsteckbar ist, **dadurch gekennzeichnet**, daß das Gestell Verbinderrohre (8) aufweist, die durch die Vierkantrohre (1.2) der Seitenteile (1) zu schieben sind und sich über die gesamte Höhe des Gestells erstrecken, daß Distanzstücke (9) vorgesehen sind, die über die Verbinderrohre (8) zu schieben sind und sich jeweils zwischen den Vierkantrohren (1.2) zweier übereinander angeordneter Seitenteile erstrecken, und daß die Verbinderrohre (8) mit den Vierkantrohren (1.2) verbunden sind.

2. Gestell nach Anspruch 1**, dadurch gekennzeichnet**, daß Verbinderrohre (8) und Vierkantrohre (1.2) mittels in den Verbinderrohren (8) vorgesehenen Gewinde, vorzugsweise eingenieteten Muttern und in diese eingreifenden, sich durch die Wand der Vierkantrohre (1.2) erstreckende Schrauben verbunden sind.

3. Gestell nach Anspruch 1, dadurch gekennzeichnet, daß jedes Seitenteil (1) einen im wesentlichen flachen länglichen Seitenträger (1.1) aufweist, der sich mittig zwischen den Vierkantrohren (1.2) erstreckt, und daß parallel zum Seitenteilträger (1.1) auf zumindest einer Seite ein Winkelprofil (1.3) zur Bildung des Steckschlitzes vorgesehen ist.

4. Gestell nach Anspruch 3, dadurch gekennzeichnet, daß das Winkelprofil (1.3) so angeordnet ist, daß sich ein im Querschnitt konisch nach innen verlaufender Steckschlitz ergibt.

5. Gestell nach einem der Ansprüche 3 und 4, dadurch gekennzeichnet, daß zu beiden Seiten jedes Seitenteilträgers (1.1) ein Winkelprofil (1.3) vorgesehen ist.

6. Gestell nach einem der Ansprüche 3 bis 5, dadurch gekennzeichnet, daß zur Versteifung der Winkelprofile (1.3) gegen Durchbiegung zumindest eine Abstützung (1.4) an der unteren Seite der Winkelprofile (1.3) mit diesen und dem jeweiligen Seitenteilträger (1.1) verbunden, vorzugsweise verschweißt ist.

7. Gestell nach Anspruch 1, dadurch gekennzeichnet, daß in die Vierkantrohre (1.2) von unten paßgenau Isolatorenplatten (3) einsteckbar sind, die durch Schnellverschlüsse (4) fixierte Isolatoren (2) aufnehmen.

8. Gestell nach einem der vorhergehenden Ansprüche, dadurch gekennzeichnet, daß zwischen den Vierkantrohren (1.2) benachbarter Seitenteile (1) Diagonalversteifungen (10) vorgesehen sind.

## Claims

1. Frame capable of being assembled from individual elements, particularly for floating batteries, which consists of vertical side parts which at each end have a square tube having a vertical axis and which are provided with slot sockets for slotting in horizontal supporting cross members or beams, at least two supporting cross members or beams which extend parallel at the same height-forming a support for floating batteries and each supporting cross member or beam having at each end a rigidly attached, downwardly projecting slot-in plate capable of being slotted into the slot sockets of the side parts, characterised in that the frame has connecting tubes (8) which have to be pushed through the square tubes (1.2) of the side parts (1) and which extend over the entire height of the frame, that spacers (9) are provided which have to be pushed over the connecting tubes (8) and which in each case extend between the square tubes (1.2) of two side parts disposed one above the other, and that the connecting tubes (8) are connected to the square tubes (1.2).

2. Frame according to Claim 1, characterised in that connecting tubes (8) and square tubes (1.2) are connected by means of screw threads provided in the connecting tubes (8), preferably nuts riveted in place, and of screws engaging therein and extending through the wall of the square tubes (1.2).

3. Frame according to Claim 1, characterised in that each side part (1) has a substantially flat, elongated side bearer (1.1), which extends centrally between the square tubes (1.2), and that an angle section (1.3) parallel to the side part bearer (1.1) is provided on at least one side to form the slot socket.

4. Frame according to Claim 3, characterised in that the angle section (1.3) is so disposed that a slot socket is formed whose cross-section extends conically inwards.

5. Frame according to one of Claims 3 and 4, characterised in that an angle section (1.3) is provided on both sides of each side part bearer (1.1).

6. Frame according to one of Claims 3 to 5, characterised in that in order to stiffen the angle sections (1.3) against sagging at least one support (1.4) is connected, preferably by welding, on the underside of the angle sections (1.3) to the latter and to the respective side part bearer (1.1).

7. Frame according to Claim 1, characterised in that insulator plates (3) are capable of being inserted from below, with an accurate fit, into the square tubes (1.2) and receive insulators (2) fastened by quick-acting closures (4).

8. Frame according to one of the preceding claims, characterised in that diagonal stiffenings (10) are provided between the square tubes (1.2) of neighbouring side parts (1).

**Revendications**

1. Cadre démontable formé d'éléments individuels, de préférence pour des batteries de secours, comprenant des éléments latéraux verticaux dont les extrémités sont munies de tubes à section carrée et à axe vertical, comprenant des fentes pour insérer des traverses ou poutres horizontales de support, au moins deux traverses ou poutres parallèles et situées à la même hauteur formant un support pour des batteries de secours et chaque traverse ou poutre étant munie à ses extrémités d'une plaque d'engagement s'étendant vers le bas, fixée de façon rigide et pouvant être introduite dans les fentes des éléments latéraux, caractérisé en ce que le cadre est muni de poutres de liaison (8) prévues pour être glissées dans les tubes à section carrée (1.2) des éléments latéraux (1) et qui s'étendent sur toute la hauteur du cadre, en ce qu'il est prévu des éléments de séparation (9) destinés à être glissés autour des tubes de liaison (8) et qui s'étendent entre les tubes à section carrée de deux éléments latéraux disposés l'un au dessus de l'autre, et en ce que les tubes de liaison (8) sont reliés aux tubes à section carrée (1.2).

2. Cadre selon la revendication 1, caractérisé en ce que les tubes de liaison (8) et les tubes à section carrée (1.2) sont reliés l'un à l'autre par l'intermédiaire de vis traversant la paroi des tubes à section carrée (1.2) et se vissant dans des filetages prévus à l'intérieur des tubes de liaison (8), de préférence formés par des écrous solidaires de la paroi des tubes de liaison (8).

3. Cadre selon la revendication 1, caractérisé en ce que chaque élément latéral (1) comprend un élément de support latéral (1.1) allongé et globalement plan qui s'étend dans un plan médian des tubes à section carrée (1.2), et en ce qu'il est prévu un profit dièdre (1.3) s'étendant parallèlement à l'élément de support latéral (1.1) sur au moins un de ses côtés pour former la fente.

4. Cadre selon la revendication 3, caractérisé en ce que le profil dièdre (1.3) est disposé de sorte que la lente présente une paroi s'étendant en biais vers l'intérieur.

5. Cadre selon l'une des revendications 3 et 4, caractérisé en ce qu'il est prévu un profil dièdre (1.3) des deux côtés de chacun des éléments de support latéral (1.1).

6. Cadre selon l'une quelconque des revendications 3 à 5, caractérisé en ce que pour rigidifier les profils (1.3) en flexion, un contrefort (1.4) est fixé, de préférence soudé, sous le profil dièdre (1.3) contre l'élément de support latéral correspondant (1.1).

7. Cadre selon la revendication 1, caractérisé en ce qu'il est prévu des plaques d'isolateur (3) emmanchables par dessous dans les tubes à section carrée (1.2), dans lesquels sont introduits des isolateurs (2) fixés par des fixations rapides (4).

8. Cadre selon l'une quelconque des revendications précédentes, caractérisé en ce qu'il est prévu des rigidificateurs diagonaux (10) entre les tubes à section carrée (1.2) d'éléments latéraux (1) voisins.

Fig. 1

Fig. 2

Fig. 3

Fig. 4

1a

1.3a

1.2a

1.1a

1.2a

Fig. 5